# EUROPÄISCHE PATENTSCHRIFT

(11) **EP 2 872 315 B1**
(45) Veröffentlichungstag und Bekanntmachung des Hinweises auf die Patenterteilung: **28.10.2015**
(21) Anmeldenummer: 14711163.7
(22) Anmeldetag: 05.02.2014
(51) Int. Cl.: B29C 53/48, B29C 65/36

(54) **SCHWEIßVORRICHTUNG ZUM HERSTELLEN VON TUBENROHRKÖRPERN**
WELDING DEVICE FOR PRODUCING TUBULAR BODIES
DISPOSITIF DE SOUDAGE POUR PRODUIRE DES TUYAUX

(30) Priorität: 25.07.2013 EP 13178084
(43) Veröffentlichungstag der Anmeldung: 20.05.2015
(73) Patentinhaber: PackSys Global (Switzerland) Ltd., 8630 Rüti (CH)
(72) Erfinder: ESSER, Ulrich, CH-8630 Rüti (CH)
(74) Vertreter: Wagner, Kilian
(86) Internationale Anmeldenummer: PCT/EP2014/052266
(87) Internationale Veröffentlichungsnummer: WO 2015/010796

(56) Entgegenhaltungen:
- EP-A1- 0 498 764
- EP-A1- 2 319 681
- EP-A1- 2 502 725
- EP-A2- 0 264 663
- CH-A5- 695 937
- DE-A1- 3 807 164

## Beschreibung

Die vorliegende Erfindung betrifft eine Schweißvorrichtung nach dem Oberbegriff des Anspruchs 1, ein Kontaktband zur Verwendung in einer solchen Schweißvorrichtung sowie ein Verfahren nach dem Oberbegriff des unabhängigen Anspruchs 14.

Aus dem Stand der Technik ist es bekannt, Tubenrohrkörper aus einem Substrat herzustellen, indem zwei Ränder des Substrates verschweißt werden, wobei das Substrat zwischen zwei Kontaktbändern, häufig in Form von über eine HF-Strahlungsquelle erhitzten Stahlbändern, aufgenommen und aufgeschmolzen wird. Hierbei schmilzt die Laminatoberfläche, wodurch sie an dem Kontaktband anhaften kann, was zum einen die Qualität der hergestellten Tubenrohrkörper, insbesondere der Schweißnaht, und zum anderen die Schweißvorrichtung selbst beeinträchtigen kann. Dies hat zur Folge, dass die Schweißvorrichtung gegebenenfalls häufig gereinigt und/oder gewartet werden muss.

Daher werden im Stand der Technik, die als Schweißbänder zum Einsatz kommenden Stahlbänder mit Teflon (PTFE) beschichtet, um zu verhindern, dass der aufgeschmolzene Kunststoff an den Schweißbändern haften bleibt und so Spuren auf den herzustellenden Schweißnähten hinterlässt. Zum Aufbringen der Teflonschicht wird die Oberfläche des Stahlbands aufgeraut und Teflon unter Druck aufgetragen, sodass das Teflon mechanisch am Stahlband haftet. Durch die begrenzte mechanische Haftung kann es zu Abspaltungen des Teflon vom Stahlband kommen, wodurch die Qualität der Tubenkörper beeinträchtigt wird, da sich zum einen Teflon an den Tubenkörpern absetzen kann und zum anderen das Stahlband (durch teilweisen Verlust der Antihaftschicht) wieder stärker haftet. Auch ist Teflon für Fließverhalten bekannt, d.h. das Teflon wandert im Verlauf der Zeit aus den am meisten mit Druck beaufschlagten Bereichen hinaus, wodurch langfristig die Dicke im funktionalen Bereich abnimmt und das Band unbrauchbar wird.

Die EP 2 319 681 A1, die CH 695 937 A5, die EP 0 498 764 A1, die EP 0 264 663 A2 sowie die EP 2 502 725 A1 beschreiben typische Schweißvorrichtungen zum Herstellen von Tubenrohrkörpern. Ein wesentliches Merkmal der bekannten Schweißvorrichtungen ist, dass diese einen kontinuierlichen Schweißprozess realisieren, also einen Schweißvorgang, bei dem das zu verschweißende Substrat während seines Vorwärtstransportes zunächst zu einer Rohrform geformt und dann während des Verschweißens relativ zu der Schweißeinrichtung in eine Förderrichtung gefördert wird. Es bestehen höchste Anforderungen an die Güte der zur Anwendung kommenden Kontaktbänder, insbesondere Schweißbänder, die im Bereich der zu verschweißenden Längsränder an dem Substrat anliegen - jede Unregelmäßigkeit in der Kontaktbandoberfläche ist auf der fertigen Schweißnaht sichtbar.

Aus dem fachfremden Gebiet der Herstellung von Buchdecken ist es, wie in der DE 38 07 164 A1 beschrieben bekannt, Polyimidfolie als Trennfolie zwischen einer Schweißeinrichtung und einem zu verschweißenden Substrat anzuordnen. Im Gegensatz zu der Tubenrohrherstellung handelt sich bei der Buchdeckenherstellung um einen getakteten Prozess, bei welchem Substrat und Schweißeinrichtung während des Schweißvorgangs nicht relativ zueinander bewegt werden. Darüber hinaus unterscheidet sich das Buchdeckenschweißen vom Substratschweißen zur Tubenrohrherstellung dadurch, dass die beim Buchdeckenverschweißen zur Anwendung kommenden Substrate wesentlich breiter sind und über eine viel größere Breitenerstreckungen miteinander verschweißt werden, als dies bei den nur randseitig zu verschweißenden Substraten bei der Tubenrohrherstellung der Fall ist.

Ausgehend vom Stand der Technik liegt der vorliegenden Erfindung die Aufgabe zugrunde, eine gattungsgemäße Schweißvorrichtung, ein Kontaktband zur Verwendung in einer solchen Schweißvorrichtung sowie ein gattungsgemäßes Verfahren so zu verbessern, dass die Qualität der hergestellten Tubenrohrkörper verbessert wird und die Standzeiten der Schweißvorrichtung erhöht werden.

Diese Aufgabe wird durch eine Vorrichtung mit den Merkmalen des Anspruchs 1, durch die Verwendung eines Kontaktbandes mit den Merkmalen des Anspruchs 13 sowie durch ein Verfahren mit den Merkmalen des unabhängigen Anspruchs 14 gelöst; vorteilhafte Weiterbildungen der Erfindung sind in den Unteransprüchen beschrieben. Zur Vermeidung von Wiederholungen sollen vorrichtungsgemäß offenbarte Merkmale als verfahrensgemäß offenbart und beanspruchbar gelten sowie verfahrensgemäß offenbarte Merkmale als vorrichtungsgemäß offenbart und beanspruchbar gelten. Merkmale, die die Ausbildung des Kontaktbandes im Rahmen der Schweißvorrichtung oder allgemein betreffen, sollen gleichermaßen für ein Kontaktband in Alleinstellung und dessen Verwendung im Kontext der Tubenrohrkörperherstellung sowie für eine Schweißvorrichtung mit einem solchen Kontaktband nach Anspruch 1 offenbart und beanspruchbar gelten.

Bei einer Schweißvorrichtung, wie sie bei der Erfindung zum Einsatz kommt, werden zwei Substratränder verschweißt, wobei ein endloses (umfangsgeschlossenes) Kontaktband an dem Substrat anliegt und wobei das Substrat mittels einer dem Substrat und/oder dem Kontaktband zugeordneten Energiequelle verschweißt wird. Das Substrat wird hierbei an der Energiequelle vorbei gefördert.

Als Energiequelle kann beispielsweise ein induktives Element zum Einsatz kommen, das eine metallische Schicht erwärmt.

Durch das erfindungsgemäße Vorsehen einer nahtlosen Kontaktfläche am Kontaktband, die Polyimid aufweist, wird ein Abrieb zwischen Kontaktband und Substrat verringert. Außerdem wird ein Fließen, wie es bei PTFEbeschichteten Bändern auftreten kann verhindert, weil Polyimid ein vernetztes Polymer ist. Als Kontaktfläche ist hierbei eine Fläche zu verstehen, die dazu ausgebildet und angeordnet ist, mit dem Substrat in Kontakt zu treten.

Polyimid zeichnet sich durch seine geringe Adhäsion bei gleichzeitig hoher Temperaturbeständigkeit sowie durch Formstabilität, insbesondere auch gegenüber Teflonbeschichtungen, aus. Durch die geringe Adhäsion wird ein Abrieb und somit eine Degradation des Substrats und/oder der Schweißvorrichtung entgegen gewirkt. Durch die höhere Temperaturbeständigkeit lässt sich unter anderem auch die Prozessgeschwindigkeit erhöhen, wodurch die Effizienz der Schweißvorrichtung gesteigert wird. Vorzugsweise kommen, bevorzugt mindestens 75 Gewichtsprozent, besonders bevorzugt zu mindestens 95 Gewichtsprozent, aromatische Polyimide als Polyimide für die Polyimid-Kontaktfläche zum Einsatz.

Allgemein ergibt sich durch die Erfindung eine überraschende Verwendung von Polyimid als Antihaftschicht bei Schweißvorrichtungen zum Herstellen von Tubenrohrköprern, da Polyimid durch seine schwere Auftragbarkeit, insbesondere gegenüber Teflon, auf den ersten Blick ungeeigneter scheint und die Vorteile von der Verwendung von Polyimid in diesem Bereich zunächst nicht ohne weiteres ersichtlich sind.

Ein wesentliches Merkmal des bei einer erfindungsgemäßen Schweißvorrichtung zur Herstellung von Tubenrohrkörpern eingesetzten, erfindungsgemäßen mindestens einen Kontaktbandes, besteht in der Realisierung einer nahtlosen Kontaktfläche aus Polyimid - die Nahtfreiheit ist für den Prozess von entscheidender Bedeutung, da jegliche Naht zu einem unerwünschten Abdruck auf der Schweißnaht der hergestellten Tubenkörper führen würde, da es sich um einen kontinuierlichen Prozess handelt, bei welchem das Substrat während des Schweißens an der Schweißeinrichtung vorbeitransportiert wird, also zunächst ein quasi endloser Rohrkörper kontinuierlich hergestellt wird, der erst nach dem Schweißvorgang in einzelne Rohrkörper abgelängt wird. Der Fachmann hat keinerlei Veranlassung eine aus dem fachfremden Buchdeckenherstellungsprozess, wie dieser in der DE 38 071 64 A1 beschrieben ist, eine dort zur Anwendung kommende Polyimidfolie als Kontaktband für den hier interessierenden Tubenkörperherstellungsprozess zu verwenden oder einen derartigen fachfremenden Stand der Technik überhaupt zu berücksichtigen. Ein Hauptgrund dafür besteht darin, dass es sich bei dem bekannten, fachfremden Herstellungsprozess im Gegensatz zu dem erfindungsgemäßen Prozess um ein getaktetes Verfahren handelt, bei welchem die Polyimidfolie während des Verschweißens nicht relativ zu dem Substrat bewegt wird - die üblicherweise bei einer endlosen Polyimidfolie vorhandenen Nahtstellen der Polyimidkontaktoberfläche werden durch eine entsprechende Taktung bzw. Steuerung des Prozesses so positioniert, dass sie während des Verschweißens so relativ zu dem Substrat angeordnet sind, dass die Nahtstellen bzw. Stoßstellen nicht in Kontakt mit dem Schweißbereich treten. Dafür, dass der Fachmann aus der DE 38 071 64 A1 keinen Hinweis auf ein Kontaktband mit einer nahtfreien Polyimidkontaktfläche erhält spricht auch, dass eine nahtfreie Polyimidkontaktfläche äußerst schwierig herstellbar ist. Für den Fall, dass, analog zu der DE 38 071 64 A1 ein endloses, vollständig aus Polyimid bestehendes Kontaktband die Bedingung einer nahtlosen Kontaktoberfläche erfüllt, kann dieses nicht durch Verkleben oder Verschweißen zweier Enden eines Polyimidbandes hergestellt werden, da hieraus zwangsläufig eine nicht erwünschte, nahtbehaftete Polyimid-Kontaktfläche resultieren würde. Vielmehr muss das gemäß der Erfindung ausgebildete Polyimidband unmittelbar endlos, d.h. an einem Stück hergestellt werden, beispielsweise indem ein Hohlkörper, z.B ein Hohlzylinder, auf seiner Innenseite mit einem Polyimidlack versehen und das resultierende Polyimidband dann nach innen von dem bevorzugt starren Hohlkörper abgezogen wird. Vorteilhaft ist es dabei, vor dem Auftragen des Polyimidlackes ein Trennmittel auf der Innenoberfläche des Holkörpers vorzusehen, um somit eine beschädigungsfreie Abtrennung des Polyimids von dem Hohlkörper zu ermöglichen. Alternativ ist es möglich einen Polyimidlack auf einen flexiblen Träger, beispielsweise auf dessen Außenseite aufzubringen, insbesondere unter Zwischenanordnung eines Trennmittels für die spätere erleichterte Trennung und nach Aushärten des Polyimidlackes den flexiblen Träger, beispielsweise in eine Richtung nach innen von dem resultierenden endlosen, nahtfreien Polyimidband abzuziehen. Erst recht erhält der Fachmann aus der DE 38 070 164 A1 keinen Hinweis auf die alternative Ausführungsvariante des Kontaktbandes als Schweißband, das eine Metallträgerschicht aufweist, die dann, wie später noch erläutert werden wird, in aufwändiger Weise mit der Polyimidbeschichtung versehen werden kann. Hierbei werden bevorzugt aromatische Tetracarbonsäureanhydride und aromatische Dyamine zu einer Polyamidocarbonsäure umgesetzt, wobei diese Lösung als Lack auf die Trägermetallschicht, insbesondere ein Stahlband aufgetragen wird.

Ein Tränken des Trägermetalls in dieser Lösung ist zusätzlich oder alternativ denkbar, wobei dann durch die Anwendung hoher Temperaturen Wasser abgespalten und das Lösungsmittel verdampft wird.

Weiterhin spricht gegen die Übertragung einer aus der fachfremden DE 38 07 164 A1 bekannten Polyamidfolie auch eine Tubenrohrkörperschweißvorrichtung, die Tatsache, dass die bekannten Verfahren zur Anwendung kommende Folie eine wesentlich größere Breite (Buchdeckelbreite) aufweist, und daher mit den zum Einsatz kommenden Führungen und Antriebsmechanismen, insbesondere innerhalb eines Dorns zur Führung des Substrates nicht eingesetzt werden könnte.

Weiterbildungsgemäß bevorzugt liegt das Substrat beidseitig jeweils an einem Kontaktband an, es ist also neben dem vorbeschriebenen (ersten) Kontaktband ein zweites Kontaktband vorgesehen. Vorzugsweise weisen beide Kontaktbänder eine Kontaktfläche mit Polyimid zum Anlegen an das Substrat auf. Hierdurch wird gewährleistet, dass das Substrat beidseitig geführt wird, wobei eine Scherkraft im Substrat gering gehalten wird.

Bevorzugt ist die gesamte Kontaktfläche des ersten und/oder zweiten Kontaktbandes aus Polyimid und/oder einem polyimidhaltigen Material. Als gesamte Kontaktfläche des ersten bzw. zweiten Kontaktbandes ist hierbei die Summe aller Oberflächenabschnitte des ersten bzw. zweiten Kontaktbandes anzusehen, die zum unmittelbaren Kontakt mit dem Substrat ausgebildet und angeordnet sind. Anders ausgedrückt kontaktieren das erste und/oder zweite Kontaktband das Substrat bevorzugt ausschließlich über eine Polyimidfläche.

Die Kontaktfläche ist bevorzugt als Beschichtung auf ein Metall, insbesondere Stahl, bevorzugt auf ein endloses Stahlband, aufgetragen. Dies hat mehrere Vorteile. Zum einen lässt sich durch eine Beschichtung ein dünnerer Aufbau ermöglichen, wodurch die Wärme vom Metall, mit einem geringeren Temperaturgradienten, effizienter auf das Substrat transportiert werden kann. Zudem ist keine separate Klebeschicht notwendig, die sich, insbesondere bei hohen Prozessgeschwindigkeiten und/oder einer hohen Betriebstemperatur, ablösen kann. Die Beschichtung kann insbesondere unmittelbar auf das Metall aufgetragen sein und/oder ggf. über einen Primer als einzige Zwischenschicht aufgetragen sein.

Bei einer aufgeklebten Folie würde es zwangsläufig zu einer Stoßstelle der Folie kommen, die wiederum als unerwünschter Abdruck auf der Schweißnaht der hergestellten Tubenrohrkörper abgebildet wäre. Ein weiterer Nachteil einer Stoßstelle liegt darin, dass sich dort ein aufgeklebtes Band vom Stahlband zu lösen beginnen kann.

Polyimid lässt sich aufgrund seiner chemischen Unlöslichkeit und seiner Vernetzung jedoch nicht in geschmolzener Form verarbeiten, sodass ein bekanntes Beschichtungsverfahren wie es von Teflon bekannt ist, nicht übertragen werden kann. Der Erfindung liegt die Erkenntnis zugrunde, dass dennoch eine Polyimidbeschichtung auf einem Stahlband aufgetragen werden kann, indem die Beschichtung in einem zweistufigen Verfahren aufgebracht wird, welche aus dem technisch entfernten Gebiet der Kupferdrahtlacke zum Herstellen einer Isolationsschicht um einen elektrisch leitenden Draht bekannt ist, und dass diese Beschichtung im vorliegenden Gebiet mit Vorteilen verbunden ist, die die möglicherweise aufwändigere Herstellung rechtfertigen.

Die Polyimidbeschichtung der Polyimid-Kontaktfläche kann beispielsweise dadurch hergestellt werden, dass aromatische Tetracarbonsäureanhydride wie Pyromellitsäuredianhydrid (1,2,4,5-Benzoltetracarbonsäuredianhydrid) oder Biphenyltetracarbonsäuredianhydrid und aromatische Diamine wie 4,4'-Diaminodiphenylether in einem wasserfreien, polaren Lösemittel wie N-Methyl-2-pyrrolidon oder Dimethylformamid zu einer Polyamidocarbonsäure umgesetzt werden, wobei diese Lösung als Lack auf das Stahlband aufgetragen wird. Ergänzend oder alternativ kann das Stahlband in eine solche Lösung getränkt werden. Durch Anwendung hoher Temperaturen, bevorzugt über 300°C, besonders bevorzugt über 360°C, erfolgt die Umsetzung zu Polyimid, wobei sich Wasser abspaltet und das Lösemittel verdampft.

Hierdurch wird eine besonders vorteilhafte Ausbildung eines Kontaktbandes erreicht, die die Vorteile von der Verwendung von Polyimid, insbesondere gegenüber Teflon, mit den Vorteilen einer Beschichtung gegenüber einem Aufkleben einer Polyimidfolie vereint.

Eine so hergestellte Polyimidoberfläche ist beständiger gegen Abrieb als eine PTFE-Beschichtung oder auch die Alternative einer aufgeklebten Polyimidfolie. Das Kontaktband kann weiter alternativ vollständig aus Polyimid gefertigt sein.

Bevorzugt ist die Kontaktoberfläche aus Polyimid als einstückiges Teil gefertigt, also bereits endlos hergestellt, und insbesondere nicht zum Erhalt einer endlosen Oberfläche zusammengeschweißt oder -geklebt. Hierdurch ergibt sich eine nahtlose Oberfläche.

Durch die Ausbildung der Kontaktfläche aus oder mit Polyimid lässt sich eine besonders glatte Oberfläche am Kontaktband herstellen, wodurch wiederum ebenfalls die Schweißnaht an den hergestellten Tubenkörpern glatt wird.

Die Kontaktoberfläche kann dennoch bewusst aufgeraut sein. Hierdurch wird es beispielsweise ermöglicht, dass bei den hergestellten Tubenkörpern die Schweißnaht die selbe (oder eine ähnliche) Rauheit aufweist wie die restliche Oberfläche des Tubenkörpers außerhalb der Schweißnaht. Bevorzugt hat die Kontaktfläche eine Oberflächenrauheit Rₐ zwischen 1 nm und 5 µm.

Wenn das Kontaktband eine metallische Schicht aufweist, kann es als Schweißband verwendet werden, indem die metallische Schicht durch die Energiequelle, beispielsweise induktiv durch ein hochfrequent wechselndes elektrisches Feld, erwärmt wird.

Wenn das Substrat eine metallische Schicht aufweist, kann diese metallische Schicht auf entsprechende Weise (alternativ oder ergänzend zu einer metallischen Schicht im Kontaktband) zum Schweißen erwärmt werden. So kommen bei Tubenrohrkörpern oft Aluminiumschichten wegen ihrer hohen Gasdurchtrittssperrwirkung zum Einsatz, die hier als erwärmte Schicht zum Schweißen eingesetzt werden können.

Die Substratränder können sich beim Verschweißen überlappen oder die Substratränder können auf Stoß verschweißt werden.

Bevorzugt werden die einzelnen Tubenrohrkörper durch Ablängen einer endlosen Tubenrohrform des Substrats hergestellt.

Vorzugsweise hat das erste und/oder zweite Kontaktband eine Breite zwischen 2 und 40 mm, vorzugsweise zwischen 4 und 20 mm und/oder eine Längserstreckung in Umfangsrichtung (Umfangserstreckung) größer 1 m, bevorzugt größer 1,5 m. Die Breitenrichtung ist hier insbesondere zur Umfangsrichtung und zur Dickenrichtung des Kontaktbandes orthogonal und liegt bevorzugt in einer Ebene mit der Polyimid-Kontaktfläche.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematisierte Darstellung einer als Hochfrequenzschweißvorrichtung ausgebildeten Schweißvorrichtung zur Herstellung von Rohrkörpern für Verpackungstuben aus einem Substrat,
- Fig. 2:: eine Schnittansicht einer als Hochfrequenz-Schweißvorrichtung ausgebildeten Schweißvorrichtung im Schweißbereich, und
- Fig. 3:: eine Schweißvorrichtung mit auf Stoß angeordneten Substraträndern.

In den Figuren sind gleiche Elemente und Elemente mit der gleichen Funktion mit den gleichen Bezugszeichen gekennzeichnet.

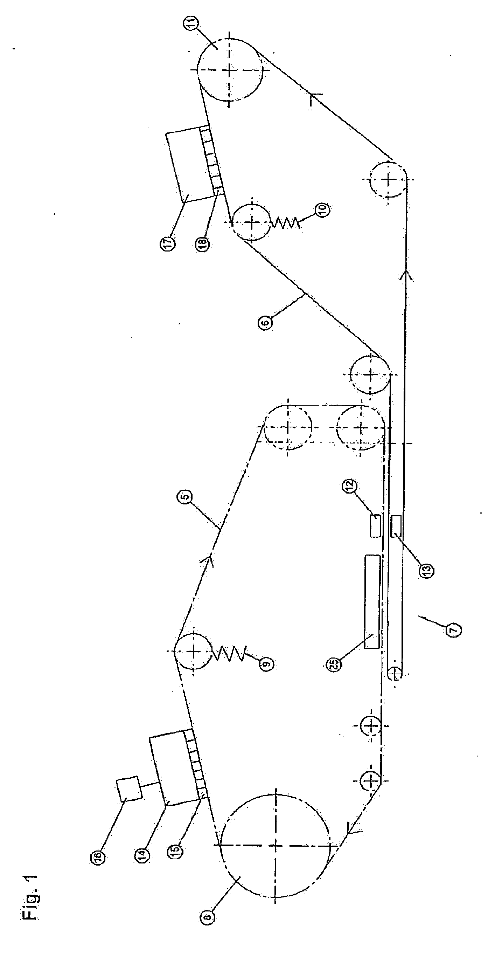

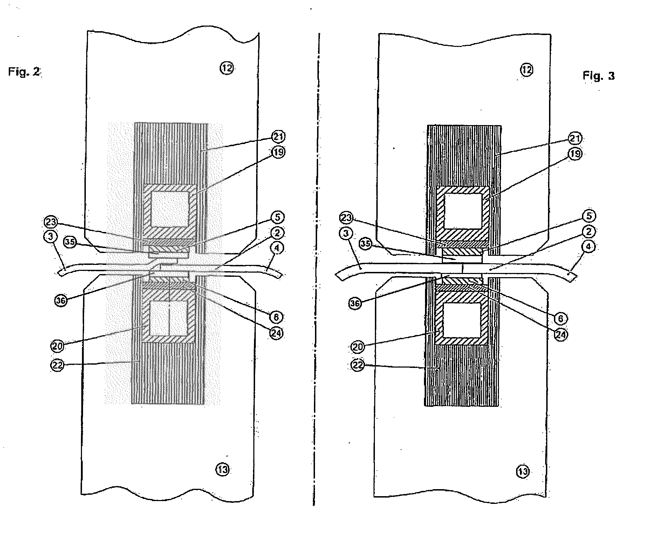

Fig. 1 zeigt wichtige Bauteile einer Schweißvorrichtung 1 zum randseitigen Verschweißen zweier in Fig. 2 dargestellter Substratränder 2, 3 eines Substrats 4. Die Substratränder 2 und 3 werden miteinander verschweißt, um so einen Rohrkörper für eine Verpackungstube zu bilden.

Die Schweißvorrichtung 1 umfasst ein erstes endloses, umlaufend angetriebenes Kontaktband 5, hier ausgebildet als Schweißband mit einem mit Polyimid beschichteten Stahlband, sowie ein abschnittsweise parallel dazu verlaufendes endloses, umlaufend angetriebenes zweites Kontaktband 6. Das zweite, hier untere, Kontaktband 6 ist in Form eines mit Polyimid beschichteten Stahlbands ausgebildet, das ein so genanntes inneres Schweißbandband bildet, das mit seinem in der Zeichnungsebene rechten Abschnitt 7 in den nicht dargestellten, herzustellenden Rohrkörper hineinragt, wohingegen das erste Kontaktband 5 entlang der äußeren Mantelfläche verläuft. Das erste Kontaktband 5 ist über eine Anzahl von Rollen geführt und es ist ein erster elektromotorischer Antrieb zum Antreiben des ersten Kontaktbandes 5 in Umfangsrichtung vorgesehen. Ferner ist dem ersten Kontaktband eine erste Spanneinrichtung 9 zum definierten Spannen des ersten Kontaktbandes 5 zugeordnet. Dem zweiten Kontaktband 6 ist eine zweite, analog aufgebaute zweite Spanneinrichtung 10 zugeordnet. Weiterhin ist ein zweiter elektromotorischer Antrieb 11 vorgesehen.

Insgesamt umfasst die Vorrichtung 1 jeweils als Hochfrequenzgenerator ausgebildete Energiequellen 12, 13 (erste Energiequelle 12, zweite Energiequelle 13), die in an sich bekannter Weise ausgebildet sind und mit dem jeweiligen Kontaktband 5, 6 zusammenwirken können. In einem Bereich zwischen den gegenüberliegenden Energiequellen 12, 13 werden die nicht dargestellten Substratränder zur Ausbildung einer Längsschweißnaht miteinander verschweißt. Den Energiequellen 12, 13 nachgeordnet ist eine von Kühlbalken gebildete Kühlzone 25 zum schnellen Abkühlen der gefügten Substratränder 2, 3. Der Kühlzone 25 nachgeordnet sind nicht gezeigte Schneidmittel zum Ablängen des endloses Tubenrohrs zu einzelnen Tubenrohrkörpern.

Das erste Kontaktband 5 wurde so mit Polyimid beschichtet, dass eine Kontaktfläche 35 zum Kontaktieren des Substrats aus Polyimid ist. Die Beschichtung wurde dadurch hergestellt, dass aromatische Tetracarbonsäureanhydride, in Form von Pyromellitsäuredianhydrid (1,2,4,5-Benzoltetracarbonsäuredianhydrid), und aromatische Diamine, in Form von 4,4'-Diaminodiphenylether, in einem wasserfreien, polaren Lösemittel, in Form von N-Methyl-2-pyrrolidon (NMP), zu einer Polyamidocarbonsäure umgesetzt wurde, und diese Lösung als Lack auf das Stahlband aufgetragen wurde. Durch Anwendung einer Temperatur über 360°C erfolgte die Umsetzung zu Polyimid, wobei sich Wasser abspaltete und das Lösemittel verdampfte.

Fig. 2 dient lediglich zur Verdeutlichung der Funktionsweise der Schweißvorrichtung 1. Fig. 2 zeigt eine schematische Schnittansicht durch die Schweißzone gemäß Fig. 1.

Wie aus Fig. 2 ersichtlich ist, umfasst jede Energiequelle 12, 13 eine Spule 19, 20 und einen Ferritkern 21, 22, wobei zwischen jeder Spule 19, 20 und dem zugehörigen Kontaktband 5, 6 eine Isolationsschicht 23, 24 angeordnet ist.

Vorliegend sind beispielhaft zwei Spulen 19, 20 dargestellt. Es würde hier grundsätzlich eine Spule 19 oder 20 genügen.

Fig. 3 zeigt eine Schweißvorrichtung 1, bei der zwei auf Stoß angeordnete Substratränder 2, 3, die von zwei Schweißbändern 5, 6, welche mit geringfügig unterschiedlicher Geschwindigkeit umlaufen, sandwichartig geklemmt sind. Ansonsten entspricht die Schweißvorrichtung 1 gemäß Fig. 3 der in Fig. 2 gezeigten Schweißvorrichtung 1.

## Patentansprüche

1. Schweißvorrichtung (1) zum Herstellen von Tubenrohrkörpern durch randseitiges Verschweißen zweier Substratränder (2, 3), insbesondere zweier Laminatränder,
mit einem endlosen, umlaufenden, ersten Kontaktband (5) zum Anlegen an das Substrat (4),
mit einer Energiequelle (12, 13) zum Bereitstellen einer Schweißenergie, und
mit Mitteln zum Fördern des Substrates (4) entlang der Energiequelle (12, 13) während des Verschweißens der Substratränder (2, 3),
**dadurch gekennzeichnet,**
**dass** das erste Kontaktband (5) eine nahtlose Polyimid-Kontaktfläche (35) zum Anlegen an das Substrat (4) aufweist.

2. Vorrichtung nach Anspruch 1,
**dadurch gekennzeichnet,**
**dass** ein zweites endloses, umlaufendes Kontaktband (6) vorgesehen ist, das vorzugsweise eine nahtlose Polyimid-Kontaktfläche (36) zum Anlegen an das Substrat aufweist.

3. Vorrichtung nach Anspruch 2,
**dadurch gekennzeichnet,**
**dass** die Kontaktbänder (5, 6) derart angeordnet sind, dass das Substrat (4) zwischen diese aufnehmbar, insbesondere klemmbar, und mit den Kontaktbändern (5, 6) mit transportierbar sind.

4. Vorrichtung nach einem der vorhergehenden Ansprüche,
**dadurch gekennzeichnet,**
**dass** die gesamte Kontaktfläche des ersten und/oder zweiten Kontaktbandes (5 bzw. 6) zum Kontaktieren des Substrates (4), bevorzugt das gesamte erste und/oder zweite Kontaktband (5 bzw. 6), vollständig aus Polyimid ist.

5. Vorrichtung nach einem der Ansprüche 1 bis 4,
**dadurch gekennzeichnet,**
**dass** die Polyimid-Kontaktfläche (35, 36) des ersten und/oder zweiten Kontaktbandes (5 bzw. 6) auf ein Metall, insbesondere Stahl, aufgetragen ist.

6. Vorrichtung nach Anspruch 5,
**dadurch gekennzeichnet,**
**dass** das Polyimid der Polyimid-Kontaktfläche (35, 36) ohne dazwischenliegende Klebeschicht unmittelbar, ggf. über einen Primer, auf das Metall aufgetragen ist.

7. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) aufgeraut ist, insbesondere mit einer Rauheit Rₐ zwischen 1 nm und 5 µm und/oder dass das erste und/oder zweite endlose Kontaktband eine Länge von größer als 1 m, vorzugsweise größer als 1,5 m, bevorzugt zwischen 1,3 m und 6 m aufweist, und/oder eine Breite zwischen 2 mm und 50 mm, vorzugsweise zwischen 4mm und 20 mm.

8. Vorrichtung nach einem der vorhergehenden Ansprüche,
**dadurch gekennzeichnet,**
**dass** das Polyimid der Polyimid-Kontaktfläche (35, 36) des ersten und/oder zweiten Kontaktbands (5 bzw. 6) zu mindestens 50 Gewichtsprozent, bevorzugt mindestens 75 Gewichtsprozent, besonders bevorzugt zu mindestens 95 Gewichtsprozent, aus einem aromatischen Polyimid besteht.

9. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) durch Auftragen einer Lösung mit Tetracarbonsäureanhydriden und Diamiden und anschließender Polykondensation dieser Lösung, bevorzugt bei einer Temperatur von über 300°C, besonders bevorzugt über 360°C, zu Polyimid hergestellt ist.

10. Vorrichtung nach einem der vorhergehenden Ansprüche,
**dadurch gekennzeichnet,**
**dass** das erste und/oder zweite Kontaktband (5 bzw. 6) als einstückiges, bevorzugt stoßstellenfreies, Teil aus Polyimid gefertigt ist.

11. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) eine Schichtdicke zwischen 5 und 100 µm, bevorzugt zwischen 10 und 40 µm, besonders bevorzugt zwischen 20 und 30 µm, aufweist.

12. Verwendung einer Schweißvorrichtung (1) nach einem der Ansprüche 1 bis 11 mit einem, bevorzugt mindestens eine Polymerschicht umfassenden, Substrat (4), zum Herstellen von Tubenrohrkörpern durch randseitiges Verschweißen zweier Substratränder (2, 3), insbesondere zweier Laminatränder eines mehrschichtigen Laminats.

13. Verwendung eines endlosen, bevorzugt als Schweißband ausgebildeten, Kontaktbandes als erstes und/oder zweites Kontaktband mit einer nahtlosen Polyimid-Kontaktfläche (35, 36) zum Anlegen an ein Substrat zum Formen von Tubenrohrkörpern in einer Schweißvorrichtung (1) bevorzugt nach einem der Ansprüche 1 bis 11, zum Herstellen von Tubenrohrkörpern, umfassend Mittel zum Fördern des Substrates (4) vorbei an einer Energiequelle zum Bereitstellen einer Schweißenergie während des Verschweißens.

14. Verfahren zum Herstellen von Tubenrohrkörpern bei dem ein Substrat (4) an zwei Substratbändern (2, 3) randseitig durch eine Schweißvorrichtung (1), insbesondere nach einem der Ansprüche 1 bis 11, verschweißt wird, wobei ein erstes endloses Kontaktband (5) an dem Substrat anliegt und wobei das Substrat (4) mittels einer Energiequelle (12, 13) verschweißt wird, an welcher das Substrat (4) während des Verschweißens vorbei gefördert wird,
**dadurch gekennzeichnet,**
**dass** das erste Kontaktband (5) das Substrat (4), bevorzugt ausschließlich, mit einer nahtlosen Polyimid-Kontaktfläche (35, 36) kontaktiert.

15. Verfahren nach Anspruch 14,
**dadurch gekennzeichnet,**
**dass** die Energiequelle (12, 13) eine Metallschicht, insbesondere eine Aluminiumschicht, in dem Substrat (4) erhitzt.

16. Verfahren nach Anspruch 14 oder 15,
**dadurch gekennzeichnet,**
**dass** die Energiequelle (12, 13) eine Metallschicht, insbesondere Stahlschicht, in dem ersten Kontaktband (5) erhitzt, bevorzugt durch Induktion.

## Claims

1. A welding device (1) for producing tubular bodies by the edge-side welding of two substrate edges (2, 3), in particular two laminate edges,
with a continuous, circulating first contact belt (5) for coming into contact with the substrate (4),
with an energy source (12, 13) for providing welding energy, and
with means for conveying the substrate (4) along the energy source (12, 13) during the welding of the substrate edges (2, 3),
**characterized in that**
the first contact belt (5) has a seamless polyimide contact surface (35) for coming into contact with the substrate (4).

2. The device according to Claim 1,
**characterized in that**
a second continuous, circulating contact belt (6) is provided, which preferably has a seamless polyimide contact surface (36) for coming into contact with the substrate.

3. The device according to Claim 2,
**characterized in that**
the contact belts (5, 6) are arranged such that the substrate (4) is able to be received, in particular able to be clamped, between these, and able to be transported together with the contact belts (5, 6).

4. The device according to one of the preceding claims,
**characterized in that**
the entire contact surface of the first and/or second contact belt (5 or respectively 6) for contacting the substrate (4), preferably the entire first and/or second contact belt (5 or respectively 6), is completely of polyimide.

5. The device according to one of Claims 1 to 4,
**characterized in that**
the polyimide contact surface (35, 36) of the first and/or second contact belt (5 or respectively 6) is applied onto a metal, in particular steel.

6. The device according to Claim 5,
**characterized in that**
the polyimide of the polyimide contact surface (35, 36) is applied on the metal directly without intermediate adhesive layer, if applicable over a primer.

7. The device according to one of the preceding claims,
**characterized in that**
the polyimide contact surface (35, 36) of the first and/or second contact belt (5 or respectively 6) is roughened, in particular with a roughness Rₐ between 1 nm and 5 µm, and/or that the first and/or second continuous contact belt has a length of greater than 1 m, particularly greater than 1.5 m, preferably between 1.3 m and 6 m, and/or has a width between 2 mm and 50 mm, particularly between 4 mm and 20 mm.

8. The device according to one of the preceding claims,
**characterized in that**
the polyimide of the polyimide contact surface (35, 36) of the first and/or second contact belt (5 or respectively 6) consists at at least 50 percent by weight, preferably at least 75 percent by weight, particularly preferably at at least 95 percent by weight, of an aromatic polyimde.

9. The device according to one of the preceding claims,
**characterized in that**
the polyimide contact surface (35, 36) of the first and/or second contact belt (5 or respectively 6) is produced by application of a solution with tetracarboxylic acid anhydrides and diamides and subsequent polycondensation of this solution, preferably at a temperature of over 300°C, particularly preferably over 360°C, to polyimide.

10. The device according to one of the preceding claims,
**characterized in that**
the first and/or second contact belt (5 or respectively 6) is manufactured as a one-piece, preferably joint-free, part from polyimide.

11. The device according to one of the preceding claims,
**characterized in that**
the polyimide contact surface (35, 36) of the first and/or second contact belt (5 or respectively 6) has a layer thickness of between 5 and 100 µm, preferably between 10 and 40 µm, particularly preferably between 20 and 30 µm.

12. A use of a welding device (1) according to one of Claims 1 to 11 with a substrate (4), preferably comprising at least one polymer layer, for producing tubular bodies by edge-side welding of two substrate edges (2, 3), in particular two laminate edges of a multi-layered laminate.

13. A use of a continuous contact belt, preferably constructed as a welding belt, as first and/or second contact belt with a seamless polyimide contact surface (35, 36) for coming into contact with a substrate for the forming of tubular bodies in a welding device (1) preferably according to one of Claims 1 to 11, for producing tubular bodies, comprising means for conveying the substrate (4) past an energy source for providing welding energy during the welding.

14. A method for producing tubular bodies, in which a substrate (4) is welded on two substrate bands (2, 3) on the edge side by a welding device (1), in particular according to one of Claims 1 to 11, wherein a first continuous contact belt (5) lies on the substrate and wherein the substrate (4) is welded by means of an energy source (12, 13), past which the substrate (4) is conveyed during the welding,
**characterized in that**
the first contact belt (5) contacts the substrate (4), preferably exclusively, with a seamless polyimide contact surface (35, 36).

15. The method according to Claim 14,
**characterized in that**
the energy source (12, 13) heats a metal layer, in particular an aluminium layer, in the substrate (4).

16. The method according to Claim 14 or 15,
**characterized in that**
the energy source (12, 13) heats a metal layer, in particular steel layer, in the first contact belt (5), preferably by induction.

## Revendications

1. Dispositif de soudage (1) pour la fabrication de corps tubulaires de tubes par soudage sur les bords de deux bords de substrat (2, 3), en particulier de deux bords de stratifié,
comportant une première bande de contact (5) se déplaçant en circuit sans fin, conçue pour le positionnement sur le substrat (4),
comportant une source d'énergie (12, 13) conçue pour fournir une énergie de soudure, et
comportant des moyens pour amener le substrat (4) le long de la source d'énergie (12, 13) pendant le soudage des bords de substrat (2, 3),
**caractérisé en ce**
**que** la première bande de contact (5) présente une surface de contact (35) à base de polyimide sans joint pour le positionnement sur le substrat (4).

2. Dispositif selon la revendication 1, **caractérisé en ce qu'**est prévue une deuxième bande de contact (6) se déplaçant en circuit sans fin, qui présente de préférence une surface de contact (36) à base de polyimide sans joint pour le positionnement sur le substrat.

3. Dispositif selon la revendication 2, **caractérisé en ce que** les bandes de contact (5, 6) sont disposées de telle sorte que le substrat (4) est transportable en pouvant être reçu, en particulier pincé entre celles-ci et avec les bandes de contact (5, 6).

4. Dispositif selon l'une quelconque des revendications précédentes, **caractérisé en ce que** la surface de contact totale de la première et/ou de la seconde bande de contact (5 ou respectivement 6) pour la mise en contact du substrat (4), de préférence la totalité de la première et/ou de la seconde bande de contact (5 ou respectivement 6) est entièrement en polyimide.

5. Dispositif selon l'une quelconque des revendications 1 à 4, **caractérisé en ce que** la surface de contact à base de polyimide (35, 36) de la première et/ou de la seconde bande de contact (5 ou respectivement 6) est appliquée sur un métal, en particulier de l'acier.

6. Dispositif selon la revendication 5, **caractérisé en ce que** le polyimide de la surface de contact à base de polyimide (35, 36) est appliqué sans couche de colle intermédiaire directement, éventuellement par l'intermédiaire d'un primaire, sur le métal.

7. Dispositif selon l'une quelconque des revendications précédentes, **caractérisé en ce que** la surface de contact à base de polyimide (35, 36) de la première et/ou de la seconde bande de contact (5 ou respectivement 6) est grainée, en particulier avec une rugosité Rₐ entre 1 nm et 5 µm et/ou en ce que la première et/ou la seconde bande de contact sans fin présente(nt) une longueur de plus de 1 m, de préférence de plus de 1,5 m, encore mieux entre 1,3 m et 6 m, et/ou une largeur comprise entre 2 mm et 50 mm, de préférence entre 4 mm et 20 mm.

8. Dispositif selon l'une quelconque des revendications précédentes, **caractérisé en ce que** le polyimide de la surface de contact à base de polyimide (35, 36) de la première et/ou de la seconde bande de contact (5 ou respectivement 6) consiste à raison d'au moins 50 pour cent en poids, de préférence d'au moins 75 pour cent en poids, de façon particulièrement préférée d'au moins 95 pour cent en poids, en un polyimide aromatique.

9. Dispositif selon l'une quelconque des revendications précédentes, **caractérisé en ce que** la surface de contact à base de polyimide (35, 36) de la première et/ou de la seconde bande de contact (5 ou respectivement 6) est produite par application d'une solution comportant des anhydrides d'acides tétracarboxyliques et des diamides et polycondensation subséquente de cette solution, de préférence à une température supérieure à 300 °C, de façon particulièrement préférée supérieure à 360 °C, conduisant au polyimide.

10. Dispositif selon l'une quelconque des revendications précédentes, **caractérisé en ce que** la première et/ou la seconde bande de contact (5 ou respectivement 6) est/sont produite(s) en tant que pièce monobloc, de préférence sans raccords, à base de polyimide.

11. Dispositif selon l'une quelconque des revendications précédentes, **caractérisé en ce que** la surface de contact à base de polyimide (35, 36) de la première et/ou de la seconde bande de contact (5 ou respectivement 6) présente une épaisseur de couche comprise entre 5 et 100 µm, de préférence entre 10 et 40 µm, de façon particulièrement préférée entre 20 et 30 µm.

12. Utilisation d'un dispositif de soudage (1) selon l'une quelconque des revendications 1 à 11, avec un substrat (4) de préférence comprenant au moins une couche de polymère, pour la fabrication de corps tubulaires de tubes par soudage sur les bords de deux bords de substrat (2, 3), en particulier de deux bords de stratifié d'un stratifié multicouche.

13. Utilisation d'une bande de contact sans fin, de préférence conçue en tant que bande de soudure, en tant que première et/ou seconde bande de contact comportant une surface de contact à base de polyimide (35, 36) sans joint conçue pour le positionnement sur un substrat pour le formage de corps tubulaires de tubes dans un dispositif de soudage (1) de préférence selon l'une quelconque des revendications 1 à 11, pour la fabrication de corps tubulaires de tubes, comprenant des moyens pour amener le substrat (4) le long d'une source d'énergie destinée à fournir une énergie de soudage pendant le soudage.

14. Procédé pour la fabrication de corps tubulaires de tubes, dans lequel un substrat (4) est soudé sur les bords sur deux bandes de substrat (2, 3) par un dispositif de soudage (1), en particulier selon l'une quelconque des revendications 1 à 11, une première bande de contact (5) sans fin étant positionnée sur le substrat et le substrat (4) étant soudé au moyen d'une source d'énergie (12, 13), le long de laquelle le substrat (4) est amené pendant le soudage,
**caractérisé en ce**
**que** la première bande de contact (5) est mise en contact avec le substrat (4), de préférence exclusivement, par une surface de contact (35, 36) à base de polyimide sans joint.

15. Procédé selon la revendication 14, **caractérisé en ce que** la source d'énergie (12, 13) chauffe une couche de métal, en particulier une couche d'aluminium, dans le substrat (4).

16. Procédé selon la revendication 14 ou 15, **caractérisé en ce que** la source d'énergie (12, 13) chauffe une couche de métal, en particulier une couche d'acier, dans la première bande de contact (5), de préférence par induction.
